# EUROPEAN PATENT SPECIFICATION

(11) **EP 2 212 384 B1**
(45) Date of publication and mention of the grant of the patent: **16.07.2014**
(21) Application number: 08851578.8
(22) Date of filing: 20.11.2008
(51) Int. Cl.: C08L 83/04, D01F 6/76, D01F 9/00, D04H 1/42, D01F 1/09, D01D 5/00, C08J 5/04

(54) **ARTICLE COMPRISING FIBERS AND A METHOD OF FORMING THE SAME**
ARTIKEL MIT FASERN UND HERSTELLUNGSVERFAHREN DAFÜR
ARTICLES COMPRENANT DES FIBRES ET PROCÉDÉ POUR LE FORMER

(30) Priority: 20.11.2007 US 3793
(43) Date of publication of application: 04.08.2010
(73) Proprietor: Dow Corning Corporation, Midland, Michigan 48686-0994 (US)
(72) Inventor: CLARK, Aneta, Bay City MI 48706 (US); HILL, Randal, Ayer MA 01432 (US); SCHMIDT, Randall, Midland MI 48642 (US); SNOW, Steven, Sanford MI 48657 (US)
(74) Representative: Neilson, Martin Mark
(86) International application number: PCT/US2008/012962
(87) International publication number: WO 2009/067232

(56) References cited:
- EP-A- 0 748 848
- EP-A- 1 767 675
- JP-A- 2004 211 216
- US-A- 3 907 954
- US-A- 4 783 289
- US-A1- 2007 003 759

## Description

### FIELD OF THE INVENTION

The present invention relates to an article that comprises fibers and a method of forming an article that comprises fibers. More specifically, the present invention relates to an article comprising fibers wherein the fibers comprise a polymer.

### BACKGROUND OF THE INVENTION

Non-woven fiber mats, as well as methods of forming the non-woven fiber mats, are known in the art. In particular, the non-woven fiber mats with which the instant application is mainly concerned comprise polymeric nanofibers or microfibers, i.e., fibers that have average diameters on the order of nanometers or microns and that are formed from polymers. Such non-woven fiber mats are the subject of lively research and development in industry, academia, and in governmental programs due to a wide variety of potential uses of such articles in filtration, medical, textile, and catalytic applications, among other applications.

Electrospinning is one method that has been used to form the non-woven fiber mats. Electrospinning includes loading a solution into a syringe, driving the solution to a tip of the syringe with a syringe pump, and forming a droplet at the tip. A voltage is applied to the syringe to form an electrified jet of the solution. The jet is elongated and whipped continuously by electrostatic repulsion until it is deposited on a grounded collector, thereby forming the non-woven fiber mat.

Known non-woven fiber mats that comprise polymeric nanofibers or microfibers have been formed from various organic and inorganic polymeric materials, including silicon, silicon dioxide, silicon carbide, silicon nitride, carbon (e.g. carbon nanotubes), aluminum oxide, aluminum nitride, boric oxide, boric nitride, titanium dioxide, zinc oxide, and other metal oxides and nitrides, Nylon 6 and its derivatives, polyalkenes, polystyrenes, polysulfones, and polyurethanes. Fibers have also been formed from hydrophilic biopolymers such as proteins, polysaccharides, collages, fibrinogens, silks, and hyaluronic acid, in addition to polyethylene and synthetic hydrophilic polymers such as polyethylene oxide.

The wetting behavior of the non-woven fiber mats is important for various commercial applications and depends on both a surface energy or chemistry and the nanoscale surface roughness of the non-woven fiber mat. In particular, there is a general desire to achieve excellent hydrophobicity with the non-woven fiber mats, which makes the non-woven fiber mats suitable for water proofing and self-cleaning usages. While non-woven fiber mats including polymeric fibers formed from certain copolymers have been shown to exhibit excellent hydrophobicity, such copolymers include organic polymers, which may exhibit insufficient fire resistance for many applications. As such, there is a general desire to increase fire resistance properties of such non-woven fiber mats for many applications, such as for textiles.

In view of the foregoing, there remains an opportunity to form an article that comprises fibers based on a desire to achieve, among other physical properties, excellent hydrophobicity while increasing fire resistance of the articles to an extent that has not yet been achieved. There also remains an opportunity to develop a method of forming such an article.

### SUMMARY OF THE INVENTION AND ADVANTAGES

The present invention provides an article including fibers and a method of forming the article, the fibers having an average diameter of from 0.01 µm to 100 µm, said fibers comprising an organopolysiloxane component selected from:
a blend of (i) an organopolysiloxane having the formula
(R₃SiO_{1/2})_{w}(R₂SiO_{2/2})ₓ(RSiO_{3/2})_{y}(SiO_{4/2})_{z} (I), wherein each R is selected from the group of an inorganic group, an organic group, and combinations thereof, w is from 0 to 0.95, x is from 0 to 0.95, y is from 0 to 1, z is from 0 to 0.9, and w+x+y+z=1, and y+z is from 0.1 to 1 and (ii) an organopolysiloxane having the formula (I), wherein each R is selected from the group of an inorganic group, an organic group, and combinations thereof,
w and x are each independently greater than 0, w+x+y+z=1, and y+z is less than 0.1,
   (ii) an organopolysiloxane having the formula (I), wherein each R is selected from the group of an inorganic group, an organic group, and combinations thereof, w is greater than 0 to 0.95, x is greater than 0 to 0.95, w+x+y+z=1, and y+z is less than 0.1, (iii) a cured product of said organopolysiloxane (i) and (ii),
   (iv) a cured product of said organopolysiloxane (ii) and combinations of (i) and (ii), provided that the fibers are free from organic polymers, all-organic copolymers, and organosiloxane-organic copolymers. The method of forming the article includes the step of forming fibers from a composition. The composition used to form the fibers comprises the organopolysiloxane (I), provided that the composition is free from organic polymers, all-organic copolymers, and organosiloxane-organic copolymers.

The articles including fibers that comprise the organopolysiloxane (I), the cured product of (I), or the combination thereof exhibit excellent hydrophobicity and maximized fire resistance to an extent that has not yet been achieved, thereby making the articles ideal for, among other applications, water-proof textiles.

### BRIEF DESCRIPTION OF THE DRAWINGS

Other advantages of the present invention will be readily appreciated, as the same becomes better understood by reference to the following detailed description when considered in connection with the accompanying drawings wherein:

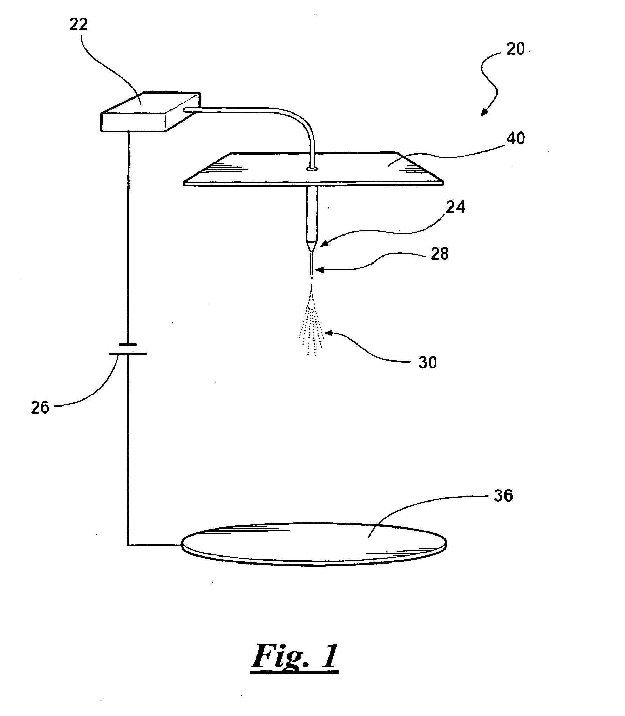

Figure 1 is a schematic view of an electrospinning process;

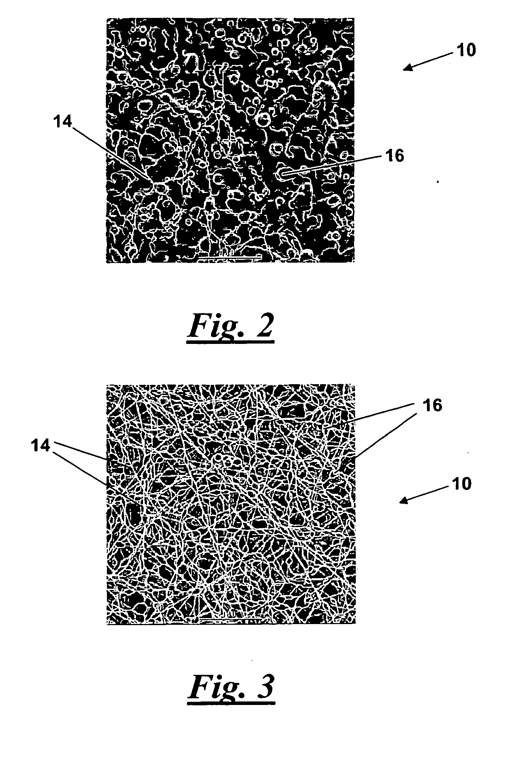

Figure 2 is a scanning electron microscope image of an article including fibers wherein the fibers are formed from a composition comprising 1) a 9: 1 mixture (based on weight) of trichloromethane/dimethylformamide and 2) an organopolysiloxane having units represented by the general formula RSiO_{3/2}, where R is selected from the group of phenyl groups, methyl groups, and combinations thereof, with the composition having a 37 weight % solids content, at a magnification of 1000X;
Figure 3 is a scanning electron microscope image of an article including fibers wherein the fibers are formed from a composition comprising 1) a 9:1 mixture (based on weight) of trichloromethane/dimethylformamide and 2) an organopolysiloxane having units represented by the general formula RSiO_{3/2}, where R is selected from the group of phenyl groups, methyl groups, and combinations thereof, with the composition having a 45 weight % solids content, at a magnification of 1000X;

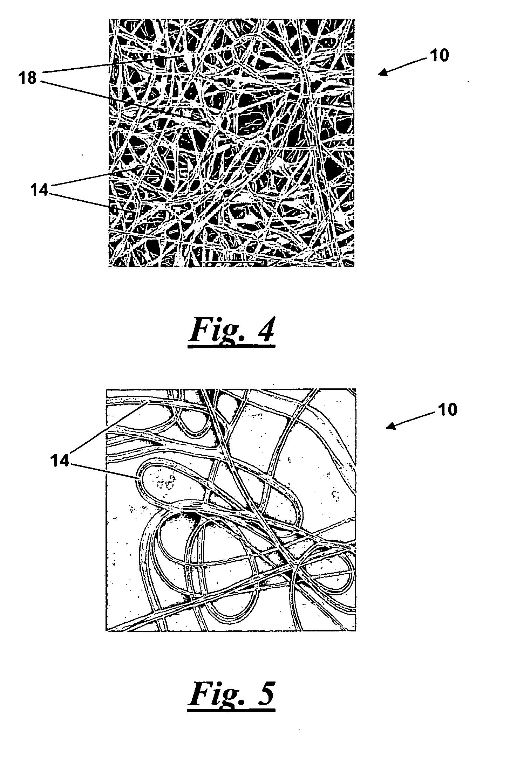

Figure 4 is a scanning electron microscope image of an article including fibers wherein the fibers are formed from a composition comprising 1) a 9:1 mixture (based on weight) of trichloromethane/dimethylformamide and 2) an organopolysiloxane having units represented by the general formula RSiO_{3/2}, where R is selected from the group of phenyl groups, methyl groups, and combinations thereof, with the composition having a 52 weight % solids content, at a magnification of 1000X;
Figure 5 is a scanning electron microscope image of an article including fibers wherein the fibers are formed from a composition comprising 1) a 9:1 mixture (based on weight) of trichloromethane/dimethylformamide and 2) an organopolysiloxane having units represented by the general formula RSiO_{3/2}, where R is selected from the group of phenyl groups, methyl groups, and combinations thereof, with the composition having a 64 weight % solids content, at a magnification of 1000X;

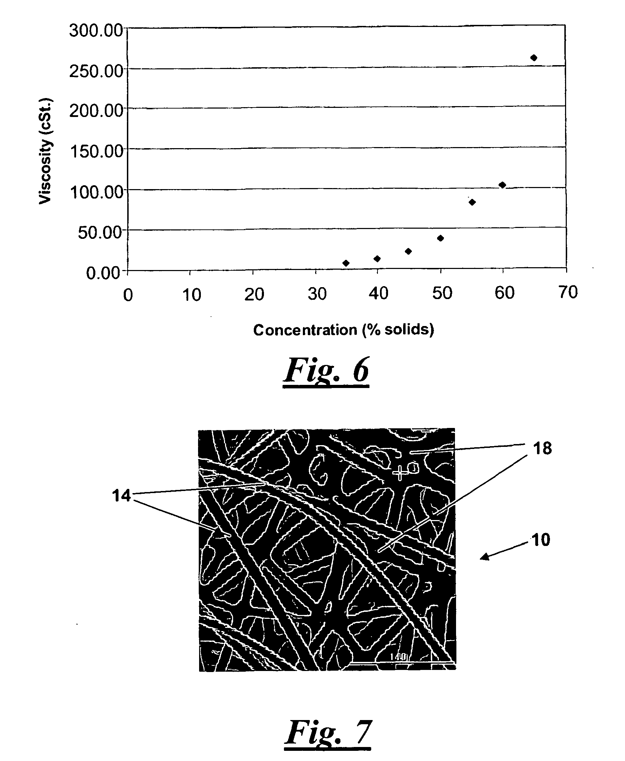

Figure 6 is a graph showing a correlation between viscosity and weight % solids content of a composition comprising 1) a 9:1 mixture (based on weight) of trichloromethane/dimethylformamide and 2) an organopolysiloxane having units represented by the general formula RSiO_{3/2}, where R is selected from the group of phenyl groups, methyl groups, and combinations thereof;
Figure 7 is a scanning electron microscope image of an article including fibers wherein the fibers are formed from a composition comprising 1) a 9:1 mixture (based on weight) of trichloromethane/dimethylformamide and 2) an organopolysiloxane having units represented by the general formula RSiO_{3/2}, where R is selected from the group of phenyl groups, propyl groups, and combinations thereof, with the composition having a 70 weight % solids content, at a magnification of 2000X;

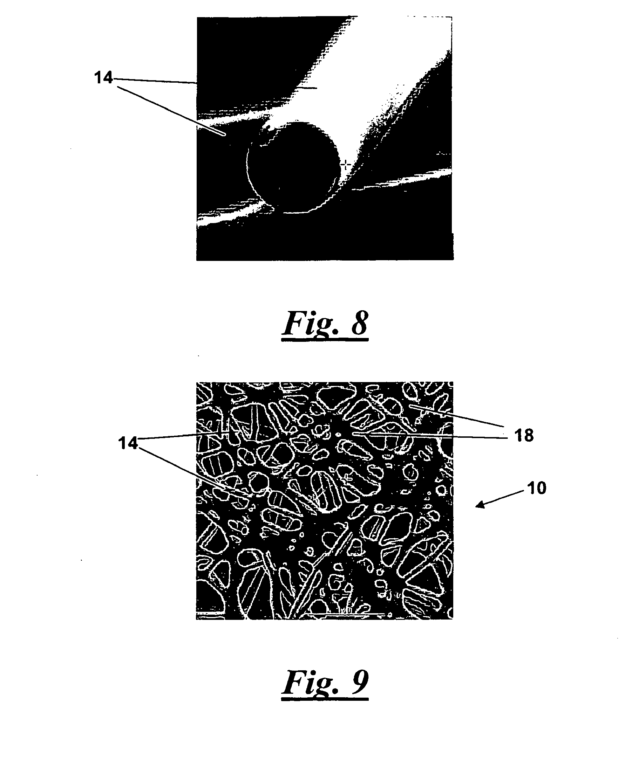

Figure 8 is a scanning electron microscope image of a cross-section of a fiber formed from a composition comprising 1) a 9:1 mixture (based on weight) of trichloromethane/dimethylformamide and 2) an organopolysiloxane having units represented by the general formula RSiO_{3/2}, where R is selected from the group of phenyl groups, propyl groups, and combinations thereof, with the composition having a 70 weight % solids content, at a magnification of 20,000X;
Figure 9 is a scanning electron microscope image of an article including fibers wherein the fibers are formed from a composition comprising 1) a 9:1 mixture (based on weight) of trichloromethane/dimethylformamide and 2) an organopolysiloxane having units represented by the general formula RSiO_{3/2}, where R is selected from the group of phenyl groups, propyl groups, and combinations thereof, with the composition having a 60 weight % solids content, at a magnification of 1000X; and

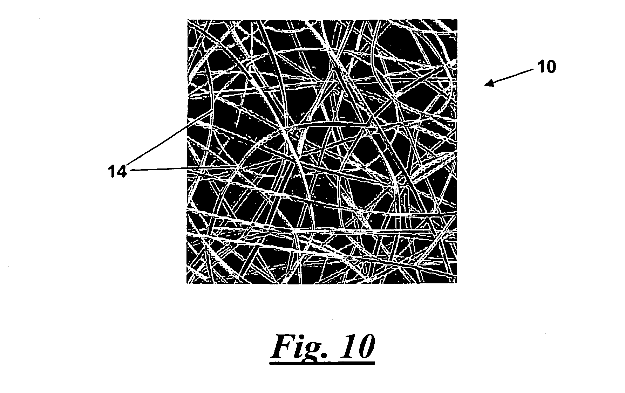

Figure 10 is a scanning electron microscope image of an article including fibers wherein the fibers are formed from a composition comprising 1) a 9:1 mixture (based on weight) of trichloromethane/dimethylformamide and 2) a 4:1 blend, by weight, of an organopolysiloxane that is a trimethyl-capped MQ resin and an additional organopolysiloxane that is a linear organopolysiloxane, with the composition having a 50 weight % solids content, at a magnification of 1000X.

### DETAILED DESCRIPTION OF THE INVENTION

The instant invention provides an article **10** that includes fibers **14** and a method of forming the article **10.** The article **10** may include only fibers **14** or may alternatively include the fibers **14** and other elements. For example, the fibers **14** may be woven or non-woven such that the article **10** itself may be a woven or a non-woven mat. In one embodiment, as shown in Figure 2-5, 7, 9, and 10, the fibers **14** and the article **10** are non-woven and the article **10** is further defined as a non-woven mat. In another embodiment (not shown), the fibers **14** and the article **10** are non-woven and the article **10** is further defined as a web. Alternatively, the article **10** may be a membrane (not shown). The fibers **14** may also be uniform or non-uniform and may have any surface roughness. In one embodiment, the article **10** is a coating on a substrate (not shown). Alternatively, the article **10** may include a fiber mat disposed on a substrate (not shown). It is also contemplated that the article **10** may be a fabric, a breathable fabric, a filter, or combinations thereof. Further, the article **10** may be used in a variety of industries such as in catalysis, filters, solar cells, electrical components, and in antimicrobial applications. Another potential application for the article **10** may be use as a superhydrophobic porous membrane for oil-water separation or for use in biomedical devices, such as for blood vessel replacements and uses in burn bandages to provide non-stick breathability.

The fibers **14** include an organopolysiloxane component. The organopolysiloxane component is selected from:
(i) an organopolysiloxane having the formula:

   R₃SiO_{1/2})_{w}(R₂SiO_{2/2})ₓ(RSiO_{3/2})_{y}(SiO_{4/2})_{z} (I)

   wherein R is selected from the group of an inorganic group, an organic group, and combinations thereof, w is from 0 to about 0.95, x is from 0 to about 0.95, y is from 0 to 1, z is from 0 to about 0.9, and w+x+y+z=1,
(ii) a cured product of (i), and
combinations of (i) and (ii).

In the formula (I), the subscripts w, x, y, and z are mole fractions. The subscript w alternatively has a value of from 0 to about 0.8, alternatively from 0 to about 0.2; the subscript x alternatively has a value of from 0 to about 0.8, alternatively from 0 to about 0.5; the subscript y alternatively has a value of from about 0.3 to 1, alternatively from about 0.5 to 1; the subscript z alternatively has a value of from 0 to about 0.5, alternatively from 0 to about 0.1. As known in the art, M units are represented by the general formula R₃SiO_{1/2}, D units are represented by the general formula R₂SiO_{2/2}, T units are represented by the general formula R₁SiO_{3/2,} and Q units are represented by the general formula SiO_{4/2}. As such, it is to be appreciated that the above general formula (I) represents organopolysiloxanes that may contain M, D, T, and/or Q units, and any combination of such units.

In one embodiment, y+z is from about 0.1 to 1 in the above formula (I). In this embodiment, it thus becomes clear that Q and/or T units are present, thereby providing that the organopolysiloxane is a resinous component (i.e., a branched organopolysiloxane as opposed to pure linear organopolysiloxanes, which include mainly D units with the backbone capped by M units). In particular, the Q and/or T units are present in an amount that is sufficient, in most cases, to provide the fibers **14** formed from the organopolysiloxanes of this embodiment, alone, with sufficient physical properties such that the fibers **14** maintain their structure over time. While the fibers **14** may be formed from the organopolysiloxanes of this embodiment alone, it is to be appreciated that the fibers **14** may be formed from additional components, including additional organopolysiloxanes, as described in detail below. In one specific embodiment, the organopolysiloxane includes only T units, in which case y=1 in the above formula (I). In another specific embodiment, the organopolysiloxane includes only M and Q units, in which case w and z are both greater than 0. Of course, it is to be appreciated that the organopolysiloxane may include any combination of M, D, T, and Q units.

In another embodiment, y+z is less than about 0.1, and w and x are each independently greater than 0. In this embodiment, it thus becomes clear that the organopolysiloxane has either no T and/or Q units (in which case the organopolysiloxane is a linear MD polymer), or has a very low amount of such units. In this embodiment, the organopolysiloxane has a number average molecular weight (Mₙ) of at least about 50,000 g/mol, more typically at least 100,000 g/mol, most typically at least 300,000 g/mol to provide the organopolysiloxane of this embodiment with sufficient physical properties such that fibers **14** formed from the organopolysiloxanes of this embodiment, alone, can sufficiently maintain their structure over time. In terms of values for w and x in this embodiment, w is less than or equal to 0.003, more typically less than or equal to 0.002, most typically less than or equal to 0.001 and x is typically at least 0.997, more typically at least 0.998, most typically at least 0.999. Again, while the fibers **14** may be formed from the organopolysiloxanes of this embodiment alone, it is to be appreciated that the fibers **14** may be formed from additional components, including additional organopolysiloxanes, as described in detail below.

In the above general formula (I), R may be selected from the group of oxygen-containing groups, organic groups free of oxygen, and combinations thereof. For example, R may comprise a substituent selected from the group of linear or branched C₁ to C₁₀ hydrocarbyl groups. Alternatively, R may comprise a substituent selected from the group of linear or branched substituted C₁ to C₁₀ hydrocarbyl groups. The substituted groups represented by R can contain one or more of the same or different substituents, provided the substituent does not prevent formation of the fiber. Examples of substituents include, but are not limited to, -F, -Cl, -Br, -I, -OH,-OR², -OCH₂CH₂OR³, -CO₂R³ -OC(=O)R², -C(=O)NR³₂, wherein R² is C₁ to C₈ hydrocarbyl and R³ is R² or -H. Alternatively, R may comprise a substituent selected from the group of aromatic groups. Of course, it is to be appreciated that R may comprise any combination of the above substituents set forth as suitable for R. For example, R may include, but is not limited to, linear and branched hydrocarbyl groups containing chains of from 1 to 5 (C₁-C₅) carbon atoms (such as methyl, ethyl, propyl, butyl, isopropyl, pentyl, isobutyl, sec-butyl groups, etc), linear and branched C₁ to C₅ hydrocarbyl groups containing carbon and fluorine atoms, aromatic groups including phenyl, naphthyl and fused ring systems, C₁ to C₅ ether, C₁ to C₅ organohalogen, C₁ to C₅ organoamine, C₁ to C₅ organoalcohol, C₁ to C₅ organoketone, C₁ to C₅ organoaldehyde, C₁ to C₅ organocarboxylic acid and C₁ to C₅ organoesters. More typically, R may include, but is not limited to, linear and branched hydrocarbyl groups containing chains of from 1 to 3 (C₁ to C₃) carbon atoms (such as methyl, ethyl, propyl, and isopropyl groups), linear and branched C₁ to C₃ hydrocarbyl groups containing carbon and fluorine atoms, phenyl, C₁ to C₃ organohalogen, C₁ to C₃ organoamine, C₁ to C₃ organoalcohol, C₁ to C₃ organoketone, C₁ to C₃ organoaldehyde and C₁ to C₃ organoester. In one specific embodiment, R is independently selected from the group of aromatic groups and C₁ to C₃ hydrocarbyl groups, provided that both aromatic groups and C₁ to C₅ hydrocarbyl groups are present in the organopolysiloxane component. Additionally, at least one R in the organopolysiloxane having the formula (I) may be a crosslinkable functional group capable of reacting in the presence or absence of a catalyst to form the cured product of the organopolysiloxane having the formula (I). Examples of such crosslinkable functional groups include, but are not limited to, silicon-bonded hydrogen, alkenyl, alkynyl, -OH, a hydrolysable group, alkenyl ether, acryloyloxyalkyl, substituted acryloyloxyalkyl, and an epoxy-substituted organic group. While the crosslinkable group is capable of forming the cured product, it is to be appreciated that the crosslinkable functional group may remain unreacted in the fibers 14 and available for further reaction at a later time. Alternatively, when the fibers **14** comprise the cured product of the organopolysiloxane having the formula (I) above, at least one R in the cured product may represent the product of a crosslinking reaction, in which case R may represent a crosslinking group in addition to another organopolysiloxane chain.

One example of an organopolysiloxane represented by formula (I) that is suitable for purposes of the instant invention has units represented by the general formula RSiO_{3/2}, where R is selected from the group of phenyl groups, methyl groups, and combinations thereof. Another example of an organopolysiloxane represented by formula (I) that is suitable for purposes of the instant invention has units represented by the general the general formula RSiO_{3/2}, where R is selected from the group of phenyl groups, propyl groups, and combinations thereof. Another example of an organopolysiloxane represented by formula (I) that is suitable for purposes of the instant invention is a trimethyl-capped MQ resin. Specific examples of organopolysiloxanes having the formula (I) include, but are not limited to, those having the following formulae:
(Vi₂MeSiO_{1/2})_{0.25}(PhSiO_{3/2})_{0.75}, (ViMe₂SiO_{1/2})_{0.25}(PhsiO_{3/2})0.75, (ViMe₂SiO_{1/2})_{0.25}(MeSiO_{3/2})₀.₂₅(PhSiO_{3/2})_{0.50}, (ViMe₂SiO_{1/2})_{0.15}(PhSiO_{3/2})_{0.75} (SiO_{4/2})0.1, and (Vi2MeSiO_{1/2})0.15(ViMe₂SiO_{1/2})0.1(PhSiO_{3/2})0.75, where Me is methyl, Vi is vinyl, Ph is phenyl, and the numerical subscripts outside the parenthesis denote mole fractions. Also, in the preceding formulae, the sequence of units is unspecified. An example of a cured product of the organopolysiloxane represented by formula (I) that is suitable for purposes of the instant invention is the cured product of a trimethyl-capped MQ resin and a Si-H functional linear organopolysiloxane. Methods of making the organopolysiloxane component described herein are known in the art.

In addition to the formulaic parameters for the organopolysiloxane component, the organopolysiloxane component is typically in a solid or a semi-solid state at temperatures within 60 °C of temperatures at which the fibers **14** are formed. More typically, the organopolysiloxane component is in a solid or a semi-solid state within 60 °C of ambient temperature. Most typically, the organopolysiloxane component is in a solid or a semi-solid state at about the temperatures at which the fibers **14** are formed. Further, the organopolysiloxane component typically has a glass transition temperature, T_{g}, of at least 25 °C, more typically from about 30 °C to about 50 °C, most typically from about 50 °C to about 300 °C To achieve the desired physical state of the organopolysiloxane component, the organopolysiloxane component typically has a number average molecular weight (Mₙ) of at least about 300 g/mol, more typically from about 1,000 to about 2,000,000 g/mol, most typically from about 2,000 g/mol to about 2,000,000 g/mol. Of course, it is to be appreciated that in embodiments in which y+z is less than about 0.1, the organopolysiloxane component may require higher Mₙ values, as set forth above, to achieve the desired physical state.

The fibers **14** may include a blend of organopolysiloxanes having the formula (I). In one embodiment, the blend of organopolysiloxanes includes organopolysiloxanes having the formula (I) that are described above. In another embodiment, the blend may include an organopolysiloxane that further satisfies the formula (R¹₃SiO_{1/2})_{w'}(R¹₂SiO_{2/2})_{x'} (II), wherein R¹ is selected from the group of an inorganic group, an organic group, and combinations thereof, w' and x' are independently greater than 0, and w'+x'=1: In effect, the organopolysiloxane of this embodiment having formula (II) is a linear organopolysiloxane, which may be the same as the linear MD polymer described above. However, in the formula (II), w' is typically from about 0.003 to about 0.5, more typically from about 0.003 to about 0.05, and x' is typically from about 0.5 to about 0.999, more typically from about 0.95 to about 0.999, in which case the linear organopolysiloxane is deemed an "additional" organopolysiloxane and is different from the linear MD polymer described above (which may be included in the fibers **14** alone without any other organopolysiloxanes). Alternatively, the additional linear organopolysiloxane represented by formula (II) can be characterized as having a molecular weight of from about 350 g/mol to about 50,000 g/mol, more typically from about 5,000 to about 50,000 g/mol. R¹ may the same or different from R in the organopolysiloxane having the formula (I) above. It is to be appreciated that even when the organopolysiloxane represented by formula (I) above is the linear MD polymer, the additional organopolysiloxane having the formula (II) may still be present, with the organopolysiloxanes distinguishable by molecular weight Mₙ or values for w' and x'.

In one embodiment, the fibers **14** include the organopolysiloxane having the formula (I) that is a resinous component and the linear organopolysiloxane having the formula (II). One specific example is a 4:1 blend, by weight, of trimethyl-capped MQ resin and a linear organopolysiloxane, wherein the MQ resin and linear organopolysiloxane remain uncrosslinked. Blends of resinous components having the formula (I) and linear organopolysiloxanes having the formula (II), in particular, result in the article **10** having excellent mechanical properties, including high yield stress and tear but at the same time, significantly lower elastic modulus, thereby resulting in articles **10** (in particular non-woven mats including the fibers **14)** that have minimal fragility and maximized elasticity. Of course, it is to be appreciated that the fibers **14** may also include any combination of separate organopolysiloxanes including only M and D units, only M and T units, only M, D, and T units, only M and Q units, only M, D, and Q units, or only M, D, T, and Q units.

All organopolysiloxanes, including the organopolysiloxane component and any additional organopolysiloxane(s), are typically present in the fibers **14** in an amount of at least 95 % by weight, more typically from about 97 to about 100 %, based on a total weight of the fibers **14** in the article **10.** In one embodiment, the fibers **14** consist essentially of the organopolysiloxanes. Typically, the organopolysiloxane component (i.e., the organopolysiloxane having the formula (I) and/or the cured product thereof) is present in the fibers **14** in an amount of at least 1 % by weight based on a total weight of fibers **14** in the article **10.**

The instant invention is subject to the proviso that the fibers **14** are free from organic polymers, all-organic copolymers, and organosiloxane-organic copolymers. Organic polymers, as used herein, are polymers having a backbone consisting only of carbon-carbon bonds. The "backbone" of a polymer, as the term is used herein, refers to the chain that is produced as a result of polymerization and the atoms that are included in that chain. As such, organic homopolymers, as well as all-organic copolymers are specifically excluded from the fibers **14** of the instant invention. Additionally, organosiloxane-organic copolymers, i.e., those having both carbon atoms and siloxane linkages in the backbone of the polymer, are excluded from the fibers **14** of the instant invention. However, it is to be appreciated that the fibers **14** may include carbon-carbon bonds in crosslinks between the polymers contained therein (such as between organopolysiloxane polymer chains when R represents the product of the crosslinking reaction and incorporates at least one additional organopolysiloxane chain), so long as the carbon-carbon bonds are absent from the backbone of the polymers contained in the fibers **14.** The presence of carbon-carbon bonds in the crosslinks between polymers is acceptable because the presence of such bonds in crosslinks has a negligible effect on fire resistance of the fibers **14** due to the low organic content, and more specifically C-H content in the fibers **14.**

In addition to the organopolysiloxane component and additional organopolysiloxane(s), the fibers **14** may further include an additive component and/or polymeric components other than the organopolysiloxane component and additional organopolysiloxanes set forth above, provided that the fibers **14** are free from organic polymers, all-organic copolymers, and organosiloxane-organic copolymers. When present in the fibers **14,** the additive component may be present in an amount of from about 0.001 to about 5.0 % by weight based on the total weight of the fibers **14** in the article **10.**

While there are no limitations as to the specific additive component that may be included in the fibers **14,** provided that the above conditions are met as to the absence of organic polymers, all-organic copolymers, and organosiloxane-organic copolymers, one example of an additive component that may be included in the fibers **14** is a conductivity-enhancing additive component. The conductivity-enhancing additive component may contribute to excellent fiber formation, and may further enable diameters of the fibers **14** to be minimized, especially when the fibers **14** are formed through a step of electrospinning (as described in additional detail below). Typically, the conductivity-enhancing additive component comprises an ionic compound. These conductivity-enhancing additives are generally selected from the group of amines, organic salts and inorganic salts, and mixtures thereof. Typical conductivity-enhancing additives include amines, quaternary ammonium salts, quaternary phosphonium salts, ternary sulfonium salts, and mixtures of inorganic salts with organic cryptands. More typical conductivity-enhancing additives include quaternary ammonium-based organic salts including, but not limited to, tetrabutylammonium chloride, tetrabutylammonium bromide, tetrabutylammonium iodide, phenyltrimethylammonium chloride, phenyltriethylammonium chloride, phenyltrimethylammonium bromide, phenyltrimethylammonium iodide, dodecyltrimethylammonium chloride, dodecyltrimethylammonium bromide, dodecyltrimethylammonium iodide, tetradecyltrimethylammonium chloride, tetradecyltrimethylammonium bromide, tetradecyltrimethylammonium iodide, hexadecyltrimethylammonium chloride, hexadecyltrimethylammonium bromide, and hexadecyltrimethylammonium iodide. When present in the fibers **14,** the additive component may be present in an amount of from about 0.0001 to about 25 %, typically from about 0.001 to about 10%, more typically from about 0.01 to about 1 % based on the total weight of the fibers **14** in the article **10.**

The fibers **14** may be of any size and shape. Scanning electron microscope images of fibers **14** that are in accordance with the instant invention are shown in Figures 2-5 an 7-10. Typically, the fibers **14** have an average diameter of from about 0.01 microns (µm) to about 100 µm, more typically from about 0.1 µm to about 10 µm, and most typically from about 0.2 µm to about 5 µm. Such fibers **14** are often referred to as "fine fibers", which encompasses fibers **14** having both micron-scale diameters (i.e., fibers having a diameter of at least 1 micron) and fibers **14** having nanometer-scale diameters (i.e., fibers having a diameter of less than 1 micron). The fibers **14** may have a generally ribbon-like, oval, or circular cross-sectional profile. For example, Figure 8 shows a fiber **14** having a generally circular cross-sectional profile. In Figures 2-4, some "beading" of the fiber **14** can be observed at **16** in Figure 3, which may be acceptable for most applications. The presence of beading **16,** the cross-sectional shape of the fiber **14** (varying from circular to ribbonous), and the fiber diameter are functions of the conditions of the method in which the fibers **14** are formed, to be described in further detail below. Typically, the fibers **14** are substantially free of beading **16,** which may result in maximized hydrophobicity of the articles **10** formed therefrom as described in further detail below.

The fibers **14** may also be fused together in places where they overlap, as shown at **18 in** **Figures 4****,** **7****, and** **9** **,** or may be physically separate such that the fibers **14** merely lay upon each other in the article **10.** It is contemplated that the fibers **14,** when connected, may form the non-woven mat having pore sizes of from 0.01 to 1000 µm. In various embodiments, the pore sizes may be from about 0.1 to about 1000 µm, typically from about 1.0 to about 500 µm, more typically from about 2.0 to about 100 µm, most typically from about 2.0 to about 50 µm. It is to be appreciated that the pore sizes may be uniform or not uniform. That is, the non-woven mat may include differing domains with differing pore sizes in each domain or between domains.

The article **10** including the fibers **14** may have a thickness of one or more layers of fibers **14.** As such, the article **10** may have a thickness of at least 0.01 µm. More typically, the article **10** has a thickness of from about 1 µm to about 100 µm, more typically from about 25 µm to about 100 µm.

The article **10** including the fibers **14** typically exhibits excellent hydrophobicity and excellent fire resistance, as well as excellent rheology properties. For example, the article **10,** in particular the non-woven mat including the fibers **14,** may exhibit a water contact angle of at least about 130 degrees, typically from about 130 to about 175 degrees, and more typically from about 140 to about 160 degrees. Articles **10** including fibers **14** that exhibit a water contact angle that is at least about 150 degrees are commonly termed as "superhydrophobic". Superhydrophobic materials are useful as liquid flow drag-reducing or "self-cleaning" articles **10.** In various embodiments, the article **10** exhibits water contact angles of from 140 to 180 degrees and 145 to 160 degrees. Defined, narrow-diameter fibers **14** within the non-woven mat create an effect of nano- or micron-scale surface roughness, which in concert with a low surface energy fiber component material substantially increases the hydrophobicity of the surface. Polyorganosiloxanes containing a low ratio of organic groups to silicon atoms are considered to be low surface energy materials with energies in the range of from 19 to 25 (ergs/cm²). In the context of the instant invention, the articles **10** have minimized surface energy due to the absence of organic polymers, all-organic copolymers, and organosiloxane-organic copolymers in the fibers **14.** The articles **10** of the instant invention may also exhibit a water contact angle hysteresis of below 15 degrees. In various embodiments, the articles 10 may exhibit water contact angle hystereses of from 0 to 15, 5 to 10, 8 to 13, and 6 to 12. The articles **10** may also exhibit an isotropic or non-isotropic nature of the water contact angle and/or the water contact angle hysteresis.

Fire resistance of the fibers **14,** particular the non-woven mat including the fibers **14,** is tested using the UL-94V-0 vertical burn test on swatches of the non-woven mat deposited onto aluminum foil substrates. In this test, a strip of the non-woven mat is held above a flame for about 10 seconds. The flame is then removed for 10 seconds and reapplied for another 10 seconds. Samples are observed during this process for hot drippings that spread the fire, the presence of afterflame and afterglow, and the burn distance along the height of the sample. For non-woven mats including the fibers **14** in accordance with the instant invention, intact fibers **14** are typically observed beneath those that burn. The incomplete combustion of the non-woven mats is evidence of self-quenching, a typical behavior of fire-retardant materials and is deemed excellent fire resistance. In many circumstances, the non-woven mats may even achieve UL 94 V-0 classification. The excellent fire resistance is attributable to a low ratio of organic groups to silicon atoms in the fibers **14.** The low ratio of organic groups to silicon atoms is attributable to the absence of organic polymers, all-organic copolymers, and organosiloxane-organic copolymers in the fibers **14.**

The article **10** including the fibers **14** may be formed by any method known in the art. In any event, the method includes the step of forming the fibers **14** from a composition. The composition may include a component comprising the organopolysiloxane having the formula (I) as set forth above, as well as the optional additional organopolysiloxane, including the additional organopolysiloxane having the formula (II), as well as other optional additives. When the organopolysiloxane component includes the cured product of the organopolysiloxane having the formula (I), the organopolysiloxane having the formula (I) in the composition used to form the fibers **14** may have the crosslinkable functional group. The crosslinkable functional group may function through known crosslinking mechanisms to crosslink individual polymers within the organopolysiloxane component, or to crosslink individual polymers within the organopolysiloxane component with other polymers present in the composition, such as the additional organopolysiloxane having the formula (II). For example, crosslinking may be accomplished through addition of an amino-functional silane into the composition used to form the fibers **14.** Alternatively, at least one R in the formula (I) may include, for example, vinyl functionality or may be a hydrogen atom, with crosslinking accomplished through reaction of the vinyl functionality or the hydrogen atom, respectively, depending upon the reaction mechanism. Alternatively or in addition to the crosslinkable functional group in the organopolysiloxane having the formula (I), the additional organopolysiloxane may have a crosslinkable functional group that enables crosslinking with the organopolysiloxane having the formula (I). It is to be appreciated that when the organopolysiloxane component includes the cured product of the organopolysiloxane having the formula (I), the cured product of the organopolysiloxane having the formula (I) may be formed during or after formation of the fibers **14.**

In one embodiment, the composition used to form the fibers **14** may only include the organopolysiloxane having the formula (I) (or combination of organopolysiloxanes having the formula (I)), as well as any additional organopolysiloxane(s) and/or additives or other polymer components (provided, of course, that the composition is free from organic polymers, all-organic copolymers, and organosiloxane-organic copolymers). In this embodiment, the composition may be melted to render the composition into a liquid state that is capable of forming into fibers **14,** in which case the composition in the fibers **14** hardens back into a solid state to maintain the structure of the fibers **14.**

In another embodiment, the composition used to form the fibers **14** may further comprise a carrier solvent, with the organopolysiloxane having the formula (I) and/or additional organopolysiloxane and optional additives and/or other polymeric components forming a solids portion of the composition that remains in the fibers **14** after formation of the fibers **14.** In this embodiment, the composition may be characterized as a dispersion of the organopolysiloxane and/or additional organopolysiloxane(s), as well as any optional additives and/or other polymeric components, in the carrier solvent. The function of the carrier solvent is merely to carry the solids portion. During formation of the fibers **14,** the carrier solvent(s) evaporate away from the composition used to form the fibers **14,** thereby leaving the solid portion of the composition. Suitable carrier solvents, for purposes of the instant invention, include any solvent that allows for the formation of homogeneous dispersion or solution mixtures with the solids portion. Typically, the carrier solvent is capable of dispersing or solubilizing the solids portion and also possesses a native vapor pressure in the range of from about 1 to about 760 torr at a temperature of about 25 °C. Typical carrier solvents also have a dielectric constant (at the temperatures at which the fibers **14** are formed) of from about 2 to about 100. Specific examples of suitable carrier solvents include ethanol, isopropyl alcohol, toluene, chloroform, tetrahydrofuran, methanol, and dimethylformamide. Additionally, water is a suitable carrier solvent. Common carrier solvents suitable for purposes of the instant invention and their physical properties are shown in Table 1. Blends of carrier solvents may be used to yield the most favorable combination of solubility of the solids portion, vapor pressure and dielectric constant.

**TABLE 1**

| **Carrier Solvent** | **Molecular Formula** | **Dielectric Constant** | **Vapor Pressure at 25 °C (torr)** |
|---|---|---|---|
| Toluene | C₇H₈ | 2.5 | 22 (20 °C) |
| Chloroform | CHCl₃ | 4.8 | ~250 |
| Tetrahydrofuran (THF) | C₄H₄O | 7.5 | ~200 |
| Methanol | CH₃OH | 32.6 | 94 (20 °C) |
| Dimethlyformamide (DMF) | C₃H₇NO | 36.7 | ~10 |
| Water | H₂O | 80.2 | 24 |

One process variable that may affect the structure of the fibers **14** and interaction of the fibers **14** with each other in the article **10** is the concentration of solids in the composition that is used to form the fibers **14.** Typically, the composition used to form the fibers **14** has a solids content of from about 1% to about 100% by weight, more typically from about 30% to about 95%, most typically from about 50% to about 70% by weight, based on the total weight of the composition. Because the solids content of the composition used to form the fibers **14** is mainly attributable to the organopolysiloxane having the formula (I), the organopolysiloxane having the formula (I) is typically present in the composition in an amount of from about 1% to about 100%, more typically from about 30% to about 95%, most typically from about 50% to about 70% by weight, based on the total weight of the composition. For example, in one specific embodiment, the composition used to form the fibers **14** includes only the organopolysiloxane having the formula (I), to the exclusion of additives or a carrier solvent. In this embodiment, the concentration of the organopolysiloxane having the formula (I) is effectively 100%.

Viscosity of the composition used to form the fibers **14** is another variable that may affect the structure of the fibers **14** and interaction of the fibers **14** with each other in the article **10.** In particular, viscosity of the composition used to form the fibers **14** may have an effect on beading in the fibers **14,** with less beading corresponding to enhanced hydrophobicity. Typically, the composition has a viscosity of at least 20 centistokes, more typically from about 30 to about 100 centistokes, most typically from about 40 to about 75 centistokes using a Brookfield rotating disc viscometer equipped with a thermal cell and an SC4-31 spindle operated at a constant temperature of 25 °C and a rotational speed of 5 rpm.

While it is to be appreciated that the instant invention is not limited to any particular method of making the article **10,** the step of forming the fibers **14** may include a step of electrospinning the composition to form the fibers **14.** The step of electrospinning may be conducted by any method known in the art. A typical electrospinning apparatus is shown at **20** in Figure 1. As is known in the art, the step of electrospinning includes use of an electrical charge to form the fibers **14.** Typically, the composition used to form the fibers **14** is loaded into a syringe **22,** the composition is driven to a tip **24** of the syringe **22** with a syringe pump, and a droplet is formed at the tip **24** of the syringe **22.** The tip **24** of the syringe **22** extends from a top plate **40.** The pump enables control of flow rate of the composition used to form the fibers **14** to the tip **24** of the syringe **22.** Flow rate of the composition used to form the fibers **14** through the tip **24** of the syringe **22** may have an effect on formation of the fibers **14.** The flow rate of the composition through the tip **24** of the syringe 22 may be from about 0.005 ml/min to about 0.5 ml/min, typically from about 0.005 ml/min to about 0.1 ml/min, more typically from about 0.01 ml/min to about 0.1 ml/min, most typically from about 0.02 ml/min to about 0.1 ml/min. In one specific embodiment, the flow rate of the composition through the tip **24** of the syringe **22** may be about 0.05 ml/min.

The droplet is then exposed to a high-voltage electric field. In the absence of the high-voltage electrical field, the droplet exits the tip **24** of the syringe **22** in a quasi-spherical shape, which is the result of surface tension in the droplet. Application of the electric field results in the distortion of the spherical shape into that of a cone. The generally accepted explanation for this distortion in droplet shape is that the surface tension forces within the droplet are neutralized by the electrical forces. Narrow diameter jets **28** of the composition emanate from the tip of the cone. Under certain process conditions, the jet **28** of the composition undergoes the phenomenon of "whipping" instability as shown in Figure 1 at **30.** This whipping instability results in the repeated bifurcation of the jet **28,** yielding a network of fibers **14.** The fibers **14** are ultimately collected on a collector plate **36.** When the composition includes the carrier solvent, the carrier solvent rapidly evaporates during the electrospinning process, leaving behind the solids portion of the composition to form the fiber.

The collector plate **36** is typically formed from a solid conductive material such as, but not limited to, aluminum, steel, nickel alloys, silicon waters, Nylon^{®} fabric, and cellulose (e.g., paper). The collector plate **36** acts as a ground source for the electron flow through the fibers **14** during electrospinning of the fibers **14.** As time passes the number of fibers **14** collected on the collector plate **36** increases and the non-woven fiber mat is formed on the collector plate **36.** Alternatively, instead of using a solid collector plate 36, the fibers **14** may be collected on the surface of a liquid that conducts electricity and that is a non-solvent of the organopolysiloxane component, thereby achieving a free-standing non-woven mat. One example of liquid that can be used to collect the fibers **14** is water.

In various embodiments, the step of electrospinning comprises supplying electricity from a DC generator **26** having generating capability of from about 10 to about 100 kilovolts (KV). In particular, the syringe **22** is electrically connected to the generator **26.** The step of exposing the droplet to the high-voltage electric field typically includes applying a voltage and an electric current to the syringe **22.** The applied voltage may be from about 5 KV to about 100 KV, typically from about 10 KV to about 40 KV, more typically from about 15 KV to about 35 KV, most typically from about 20 KV to about 30 KV. In one specific example, the applied voltage may be about 30 KV. The applied electric current may be from about 0.01 nA to about 100,000 nA, typically from about 10 nA to about 1000 nA, more typically from about 50 nA to about 500 nA, most typically from about 75 nA to about 100 nA. In one specific embodiment, the electric current is about 85 nA.

The collector plate **36** may function as a first electrode and may be used in combination with the top plate **40** functioning as a second electrode, as shown in Figure 1. The top plate **40** and the collector plate 36 are typically spaced at a distance of from about 0.001 cm to about 100 cm, typically from about 20 cm to about 75 cm, more typically from about 30 cm to about 60 cm, most typically from about 40 cm to about 50 cm relative to each other. In one embodiment, the top plate **40** and the collector plate **36** are spaced at a distance of about 50 cm.

The method may also include the step of annealing the article **10** including the fibers **14.** This step may be completed by any method known in the art. In one embodiment, the step of annealing may be used to enhance the hydrophobicity and fire resistance of the fibers **14** in the article **10.** The step of annealing may include heating the article **10** including fibers **14.** Typically, to carry out the step of annealing, the article **10** including fibers **14** is heated to a temperature above ambient temperature of about 20 °C. More typically, the article **10** including fibers **14** is heated to a temperature of from about 40 °C to about 400 °C, most typically from about 40 °C to about 200 °C. Heating of the article **10** including fibers **14** may result in increased fusion of fiber junctions within the article **10,** creation of chemical or physical bonds within the fibers **14** (generally termed "cross-linking"), volatilization of one or more components of the fiber, and/or a change in surface morphology of the fibers **14.**

Successful formation of fibers **14** may be realized by the formation of the non-woven mat and the identification of individual fibers **14** under electron microscopy at a magnification of at least 1000X. Typical non-woven mats, under electron microscopy, are shown in Figures 2-5 and 7-10.

The following examples are meant to illustrate, and not to limit, the present invention.

### EXAMPLES

Fiber mats are formed from compositions including various organopolysiloxane components, including silicone resins (i.e., branched siloxanes). Fiber mats are also formed from compositions including and blends of silicone resins (i.e., the organopolysiloxane component) and linear silicones (i.e., the additional organopolysiloxane).

### Example 1: Fibers Formed From an Organopolysiloxane Component Including a MQ Resin

The organopolysiloxane component used in this example is represented by the general formula [R₃SiO_{1/2}][SiO_{4/2}], wherein R is a methyl group. The organopolysiloxane component has a Tg of 200 °C and 4000 < Mₙ < 6000. The organopolysiloxane component was dissolved in a carrier solvent comprising a mixture of chloroform and DMF, thereby forming a colorless, homogeneous composition to be used to form the fibers. The carrier solvent was prepared at a 9:1 weight ratio of chloroform to DMF. The solids content of the composition was 50% by weight. The composition was pumped to a syringe of an electrospinning apparatus at a rate of 0.07 mL/min. The droplet at the tip of the syringe was exposed to an electrical potential of 20 kV across an electrode gap distance of 25 cm. Fibers were collected on the surface of a collector plate formed from aluminum foil, for a period of about 10 minutes, at which point electrospinning was stopped and the fibers formed a non-woven mat on the collector plate. The mat appeared colorless (white). Scanning electron microscopy (SEM) analysis revealed uniform, ribbon-shaped fibers which were approximately 10 µm in diameter. The contact angle of a drop of water placed on the mat was measured as 156°.

### Example 2: Fibers from an Organopolysiloxane

### Component Including a T-Resin

The organopolysiloxane component used in this example is represented by the general formula RSiO_{3/2}, wherein R = a methyl group or a phenyl group, with a Tg of 52 °C and 2500 < M_{w} < 3500. The organopolysiloxane component was dissolved in a carrier solvent comprising a mixture of chloroform and DMF, thereby forming a colorless, homogeneous composition to be used to form the fibers. The carrier solvent was prepared at a 9:1 weight ratio of chloroform to DMF. The solids content of the composition was 64% by weight. The composition was pumped to a syringe of an electrospinning apparatus at a rate of 0.1 mL/min. The droplet at the tip of the syringe was exposed to an electrical potential of 20 kV across an electrode gap distance of 25 cm. Fibers were collected on the surface of a collector plate formed from aluminum foil, for a period of about 10 minutes, at which point electrospinning was stopped and the fibers formed a non-woven mat on the collector plate. The mat appeared colorless (white). SEM analysis of the mat revealed uniform, ribbon-shaped fibers which were approximately 10 µm in diameter. The contact angle of a drop of water placed on the mat was measured as 157°.

### Example 3: Controlled Reduction of Fiber Diameters

This example used the same organopolysiloxane component described in Example 2. The organopolysiloxane component was dissolved in a carrier solvent comprising a mixture of chloroform and DMF, thereby forming a colorless, homogeneous composition to be used to form the fibers. The carrier solvent was prepared at a 4:1 weight ratio of chloroform to DMF. Also included in the carrier solvent was tetrabutylammonium chloride, which is a conductivity-enhancing additive component and which was present in an amount of 1% by weight based on the weight of the carrier solvent to improve the conductivity of the composition used to form the fibers and to collect fibers with smaller diameters. The solids content of the composition was 60% by weight. The composition was pumped to a syringe of an electrospinning apparatus at a rate of 0.005 mL/min. The droplet at the tip of the syringe was exposed to an electrical potential of 30 kV across an electrode gap distance of 50 cm. Fibers were collected on the surface of a collector plate formed from aluminum foil, for a period of about 10 minutes, at which point electrospinning was stopped and the fibers formed a non-woven mat on the collector plate. The mat appeared colorless (white). SEM analysis of the mat revealed fine fibers with a diameter distribution between 0.5 µm and 1 µm.

### Example 4: Fibers Formed From an Organopolysiloxane Component Including a Blend of an MQ Resin and Linear Organopolysiloxane

This example uses a composition including a blend of an MQ resin (i.e., the organopolysiloxane) represented by the general formula [R₃SiO_{1/2}][SiO_{4/2}], wherein R is a methyl group, and a high molecular weight linear organopolysiloxane represented by the general formula [R₃SiO_{1/2}][R₂SiO_{2/2}], where R is a methyl group and a linear organopolysiloxane (i.e., the additional organopolysiloxane). The MQ resin has the same Tg and Mₙ as the MQ resin of Example 1. The linear organopolysiloxane has a viscosity of about 300 cSt., a pour point of -50 °C, and 10,000 < Mₙ < 13,000. The composition including the MQ resin and linear organopolysiloxane was blended at a weight ratio of 4:1 and was dissolved in a carrier solvent comprising a mixture of chloroform and DMF, thereby forming a colorless, homogeneous composition to be used to form the fibers. The carrier solvent was prepared at a 9:1 weight ratio of chloroform to DMF. The solids content of the composition was 50% by weight. The composition was pumped to a syringe of an electrospinning apparatus at a rate of 0.05 mL/min. The droplet at the tip of the syringe was exposed to an electrical potential of 30 kV across an electrode gap distance of 25 cm. Fibers were collected on the surface of a collector plate formed from aluminum foil, for a period of about 10 minutes, at which point electrospinning was stopped and the fibers formed a non-woven mat on the collector plate. The mat appeared silvery. SEM analysis revealed uniform, ribbon-shaped fibers which were approximately 10 µm in diameter.

### Example 5: Increased Throughput for Rapid Fiber Fabrication

The organopolysiloxane component used in this example is identical to the organopolysiloxane component used in Example 1. The organopolysiloxane component was dissolved in a carrier solvent comprising a mixture of isopropyl alcohol and DMF, thereby forming a hazy, colorless, homogeneous composition to be used to form the fibers. The carrier solvent was prepared at a 1:1 weight ratio of isopropyl alcohol to DMF. The solids content of the composition was 50% by weight. The composition was pumped to a syringe of an electrospinning apparatus at a rate of 1 mL/min. The droplet at the tip of the syringe was exposed to an electrical potential of 25 kV across an electrode gap distance of 25 cm. Fibers were collected on the surface of a collector plate formed from aluminum foil, for a period of about 10 minutes, at which point electrospinning was stopped and the fibers formed a non-woven mat on the collector plate. The fibers accumulated rapidly as fluffy white mounds that appeared to grow "up" dendritically from the collector plate. SEM analysis of the fluffy revealed cylindrical, porous fibers with diameters ranging from 1 - 10 µm.

### Example 6: Fibers That Were Chemically Crosslinked and Physically Fused Post-Electrospinning

The composition used to form the fibers in this example includes the same MQ resin of Example 1, and additionally includes a high molecular weight linear organopolysiloxane "gum" represented by the general formula [R₃SiO_{1/2}][R₂SiO_{2/2}], where R is a methyl group. The linear organopolysiloxane has a coefficient of plasticity in the range of 0.045 and 0.555. The MQ resin and linear organopolysiloxane were dissolved in a carrier solvent comprising xylene. An amino-functional silane was added to the organopolysiloxane component and xylene as a crosslinking agent at 0.5% by weight to create a stock solution. The stock solution was further diluted using 2-butanone as an additional solvent, thereby forming a composition to be used to form the fibers. The amount of 2-butanone was 10% by weight of the composition. The amount of xylene was 30% by weight of the composition. The solids content of the composition was 60% by weight. The composition was pumped to a syringe of an electrospinning apparatus at a rate of 1 mL/min. The droplet at the tip of the syringe was exposed to an electrical potential of 35 kV across an electrode gap distance of 20 cm. Fibers were collected on the surface of a collector plate formed from aluminum foil, for a period of about 10 minutes, at which point electrospinning was stopped and the fibers formed a non-woven mat on the collector plate. As the electrospinning jet moved and changed, fibers would build up between the tip of the syringe and the collector plate. The resulting fiber mat was opaque, white, flexible, and sticky. SEM analysis of the fiber mat revealed round fibers with diameters ranging from 1 - 15 µm. Heating the fibers at 80 °C for 20 minutes activated the crosslinking agent, which formed chemical bonds within the organopolysiloxane component in the fibers. The chemical reaction was observable as a visible change in the fibers from opaque to transparent. Heating under ambient pressure yielded mainly individual fibers, whereas heating in a vacuum oven resulted in complete welding of fibers at touch points into a net-like structure. The fiber mat was tacky to the touch and remained intact and adhered to the collector plate when flexed.

### Example 7: Free-Standing Fiber Mats Formed From an Organopolysiloxane Component Having, High T_{g}

The organopolysiloxane component used in this example is represented by the general formula RSiO_{3/2}, wherein R = a phenyl group, with a relatively high Tg of 170 °C and 2000 < M_{w} < 4000 The organopolysiloxane component was dissolved in a carrier solvent comprising DMF, thereby forming a colorless, homogeneous composition to be used to form the fibers. The solids content of the composition was 60% by weight. The composition was pumped to a syringe of an electrospinning apparatus at a rate of 0.05 mL/min. The droplet at the tip of the syringe was exposed to an electrical potential of 30 kV across an electrode gap distance of 35 cm. Fibers were collected on the surface of water that was connected to an electrical ground and contained within a glass dish, for a period of about 10 minutes, at which point electrospinning was stopped and the fibers formed a non-woven mat on the collector plate. The mat was brittle and appeared white. The mat was collected from the water by removing it in a motion parallel to the surface, resulting in a free-standing mat of fibers. Atomic force microscopy and confocal light microscopy revealed ribbon-like fibers with diameters ranging from 0.5 µm to 5 µm.

### Example 8: Fibers Formed From an Organopolysiloxane Component Comprising a Blend of a Reactive Resin and a Linear Organopolysiloxane

The composition used to form the fibers in this example includes the same MQ resin of Example 1, and additionally includes a Si-H functional linear organopolysiloxane represented by the general formula [R₃SiO_{1/2}][R₂SiO_{2/2}], where R is a methyl group or a hydrogen atom. The linear organopolysiloxane has a viscosity of about 30 cSt. and 2000 < Mₙ < 6000. The Si-H bond is chemically reactive with alcohols, silanols, acids, bases, and other readily reducible compounds. A weight ratio of the MQ resin to Si-H functional linear organopolysiloxane was 9:1. The MQ resin and Si-H functional linear organopolysiloxane were dissolved in a carrier solvent comprising a mixture of isopropyl alcohol and DMF, thereby forming a colorless, homogeneous composition to be used to form the fibers. The carrier solvent was prepared at a 1:1 weight ratio of isopropyl alcohol to DMF. The content of the MQ resin and Si-H functional linear organopolysiloxane in the composition was 60% by weight. The composition was pumped to a syringe of an electrospinning apparatus at a rate of 1 mL/min. The droplet at the tip of the syringe was exposed to an electrical potential of 35 kV across an electrode gap distance of 20 cm. Fibers were collected on the surface of a collector plate formed from aluminum foil, for a period of about 10 minutes, at which point electrospinning was stopped and the fibers formed fluffy but brittle mounds on the collector plate. SEM analysis of the fluffy but brittle mounds revealed cylindrical, porous fibers having a diameter of from 1 µm to 10 µm.

### Example 9: Illustration of Superhydrophobicity of Fiber Mats

For a given composition used to form the fibers, fiber formation correlates to obtaining high values for contact angle, which results in a surface that is very hydrophobic. Figures 7 and 8 illustrate fibers that were formed from a composition including an organopolysiloxane component represented by the general formula RSiO_{3/2}, where R is selected from the group of phenyl groups, propyl groups, and combinations thereof, in a carrier solvent including trichloromethane and dimethylformamide present in a weight ratio of 9:1, with the composition having a 70 weight % solids content. The composition was pumped to a syringe of an electrospinning apparatus at a rate of 0.05 mL/min. The droplet at the tip of the syringe was exposed to an electrical potential of 30 kV across an electrode gap distance of 25 cm. Fibers were collected on the surface of a collector plate formed from aluminum foil, for a period of about 10 minutes, at which point electrospinning was stopped. As can be seen in Figures 7 and 8, fiber mats prepared at such high solids content produced fine fibers which were circular in cross-section. The mat composed of those types of fibers had a high contact angle of 145 / 145°. The fibers were quite uniform in diameter. When the solids content in the composition used to form the fibers was lowered to 60 weight %, the features of the fibers were much less defined. More variation in fiber diameter was observed and the fibers appeared to be flattened and not cylindrical, although no cross section of the lower concentration sample was obtained. Also, the fiber junctions observed in 70% samples appeared melted into a film in the fiber mats formed from the composition having 60 weight % solids content. The contact angle was also recorded to be lower in the fiber mat formed from the composition having 60 weight % solids content (131 / 130°). This shows that defined fibers within a mat create an effect of surface roughness, which in turn increases the hydrophobicity of the surface.

Figures 2-5 also illustrate the relationship between solids content in the composition used to form the fibers and fiber formation. In particular, Figures 2-5 illustrate a typical progression of fiber morphology observed as a function of percent solids content in the compositions used to form the fibers, with an organopolysiloxane component represented by the general formula RSiO_{3/2}, where R is selected from the group of phenyl groups, methyl groups, and combinations thereof, in a carrier solvent including trichloromethane and dimethylformamide present in a weight ratio of 9:1. Solids content of the various compositions used to form the fibers was varied, with Figures 2-5 illustrating fibers formed from compositions having a solids content of 37%, 46%, 56%, and 64%, respectively.

The composition used to form the fiber mats shown in Figures 2-5 was pumped to a syringe of an electrospinning apparatus at a rate of 0.05 mL/min. The droplet at the tip of the syringe was exposed to an electrical potential of 30 kV across an electrode gap distance of 25 cm. Fibers were collected on the surface of a collector plate formed from aluminum foil, for a period of about 10 minutes, at which point electrospinning was stopped and the fibers formed fluffy but brittle mounds on the collector plate.

At 37% solids content, as shown in Figure 2, few fibers can be clearly identified. As the solids content is increased to 46%, as shown in Figure 3, more fiber formation is observed, although beading can be observed in those fibers. Further increase in solids content to 56% as shown in Figure 4 results in almost complete disappearance of the beads, leaving fibers with irregular edges. Finally, at 64% solids content, the beading effect is completely gone and the only features are smooth, semi-uniform fibers, which provide enhanced hydrophobicity as compared to fibers having beads.

### Example 10: Relationship of Solids Content in Composition Used to Form Relationship of Viscosity Versus Fiber Formation

Referring to Figure 6, non-linear increases in viscosity of the composition used to form the fibers is observed as solids content in the composition increases. Notably, the data points in Figure 6 correspond, at least in part, to the compositions used to form the non-woven mats shown in Figures 2-5 and described in Example 10. Comparison of the data in Figure 6 with the images of Figures 2-5 indicates that fiber formation is correlated to viscosity of the composition used to form the fibers, with ideal viscosity of the composition represented by a point where viscosity increases with solids content in a non-linear fashion. Without being bound to any particular theory, it is believed that fiber formation is influenced by opposing forces, specifically surface tension, electrical field, and solution viscosity. Once a fiber is drawn, then surface tension acts to retract the fiber into droplets (the beading seen in many fibers, in Figures 2-4 in particular, is an intermediate state between a fully-drawn fiber and a droplet). The rate of liquid flow in this bead/droplet formation process decreases with an increase in viscosity of the composition used to form the fibers. As set forth above in the context of the effect of solids content on fiber formation, smooth, semi-uniform fibers, which provide enhanced hydrophobicity as compared to fibers having beads.

### Example 11: Fire Retardancy of Various Fiber Mats

Fiber mats were formed from various compositions for the purpose of classifying the fiber mats with regard to fire resistance, including two Comparative Examples of fiber mats formed from compositions that are not in accordance with the instant invention. In one Comparative Example, fiber mats were prepared from a composition including a poly(styrene-co-dimethylsiloxane) diblock copolymer. The poly(styrene-co-dimethylsiloxane) diblock copolymer was synthesized by sequential controlled anionic polymerization of styrene and then hexamethylcyclotrisiloxane (D₃) as shown in Figure 1 of Rosati, D.; Perrin, M.; Navard, P.; Harabagiu, V.; Pinteala, M.; Simionescu, B. C. Macromolecules, 1998, 31, 4301; Pantazis, D.; Chalari, I.; Hadjichristidis, N. Macromolecules, 2003, 36, 3783. All operations were carried out in a *Schlenk* line operating under a vacuum pump and dry nitrogen or argon. A 21% by weight composition of the poly(styrene-co-dimethylsiloxane) diblock copolymer was prepared by dissolution in a carrier solvent comprising a 3:1 mixture by weight of tetrahydrofuran (THF): dimethylformamide (DMF) (Aldrich). The composition including the poly(styrene-co-dimethylsiloxane) diblock copolymer in the carrier solvent was milky gel-like and stable (no further solidification or precipitation takes place during storage) at room temperature of about 20 °C. The composition was electrospun using a parallel plate setup as described in Shin, Y. M.; Hohman, M. M.; Brenner, M. P.; Rutledge, G. C. Polymer 2001, 42, 9955. The electrical potential, solution flow rate, the protrusion of the tip of the syringe from an upper plate and a distance between a capillary tip and collector plate were adjusted so that electrospinning was stable and dry nanofibers were obtained. Specific values for the above-mentioned parameters are shown below in Table 2.

**TABLE 2**

| Flow Rate | Tip Protrusion | Tip-to-Collector Distance | Voltage |
|---|---|---|---|
| 0.05 ml/min | 2 cm | 50 cm | 30 KV |

In another Comparative Example, a fiber mat is formed from a composition comprising a copolymer of a linear silicone and a polyetherimide. The linear silicone/polyetherimide copolymer is commercially available from Gelest, Inc. of Morrisville, Pennsylvania. The reported Tg of the linear silicone/polyetherimide copolymer is 168 °C. A composition comprising 22 % by weight of linear silicone/polyetherimide copolymer in dimethylformamide carrier solvent was prepared. The composition was pumped to a syringe of an electrospinning apparatus at a rate of 0.03 mL/min. The droplet at the tip of the syringe was exposed to an electrical potential of 28 kV across an electrode gap distance of 30 cm. Fibers were collected on the surface of a collector plate formed from aluminum foil, for a period of about 10 minutes, at which point electrospinning was stopped. SEM analysis of the resulting fiber mat revealed fibers ranging in diameter of 0.2 µm to 1.5 µm.

The results of fire resistance tests for the Comparative Examples, as well as for Examples 1, 2, and 4, are shown in Table 3.

**TABLE 3**

| **Fiber Mat Reference** | **Dripping** | **Afterflame** | **Afterglow** | **Burned Entire Height** | **Classification** |
|---|---|---|---|---|---|
| Poly(styrene-co-dimethylsiloxane) Diblock Copolymer (Comparative Example) | None | None | None | 8/10 samples | Not achieved |
| Linear silicone/polyether imide copolymer (Comparative Example) | None | None | None | 0/10 samples | **UL 94 V-0** |
| Example 1 | None | None | None | 2/10 samples | Not achieved |
| Example 2 | None | None | None | 0/10 samples | **UL 94 V-0** |
| Example 4 | None | None | None | 2/10 samples | Not achieved |

As shown in Table 3, the Comparative Example in which the fiber mat was formed from the composition including the poly(styrene-co-dimethylsiloxane) diblock copolymer, which had a high organic content, showed poor fire resistance. The Comparative Example in which the fiber mat was formed from the composition including the linear silicone/polyetherimide copolymer shows better fire resistance than the Comparative Example in which the poly(styrene-co-dimethylsiloxane) diblock copolymer was used. However, polyetherimide is known to be a fire-retardant organic polymer that is classified as UL 94 V-0; addition of linear silicone with the polyetherimide did not appear to increase the polymers' flammability. Although UL 94 V-0 classification was not achieved for the two samples in which the fiber mat was formed from the composition including MQ resin (Examples 1 and 4), intact fibers were observed on these samples beneath those that had burned. The incomplete combustion of these samples is evidence of self-quenching, a typical behavior of fire-resistant materials.

The invention has been described in an illustrative manner, and it is to be appreciated that the terminology which has been used is intended to be in the nature of words of description rather than of limitation. Obviously, many modifications and variations of the present invention are possible in view of the above teachings. It is, therefore, to be appreciated that within the scope of the claims the invention may be practiced otherwise than as specifically described.

## Claims

1. An article comprising fibers having an average diameter of from 0.01 µm to 100 µm, said fibers comprising an organopolysiloxane component selected from:
a blend of (i) an organopolysiloxane having the formula (R₃SiO_{1/2})_{w}(R₂SiO_{2/2})ₓ(RSiO_{3/2})_{y(}SiO_{4/2})_{z} (I), wherein each R is selected from the group of an inorganic group, an organic group, and combinations thereof, w is from 0 to 0.95, x is from 0 to 0.95, y is from 0 to 1, z is from 0 to 0.9, w+x+y+z=1, and y+z is from 0.1 to 1 and (ii) an organopolysiloxane having the formula (I), wherein each R is selected from the group of an inorganic group, an organic group, and combinations thereof, w is greater than 0 to 0.95, x is greater than 0 to 0.95, w+x+y+z=1, and y+z is less than 0.1,
said organopolysiloxane (ii),
(iii) a cured product of said blend of organopolysiloxanes (i) and (ii),
(iv) a cured product of said organopolysiloxane (ii), and
combinations of the blend of (i) and (ii), and (iii),
provided that said fibers are free from organic polymers, all-organic copolymers, and organosiloxane-organic copolymers.

2. An article as set forth in claim 1 wherein said organopolysiloxane (ii) has a number average molecular weight (Mₙ) of at least 50,000 g/mol.

3. An article as set forth in claim 1 wherein the organopolysiloxane (ii) further satisfies the formula (R¹₃SiO_{1/2})_{w'}(R¹₂SiO_{2/2})_{x'} (II), wherein R¹ is selected from the group of an inorganic group, an organic group, and combinations thereof, w' and x' are independently greater than 0, and w'+x'=1.

4. An article as set forth in any preceding claim wherein R is selected from the group of oxygen-containing groups, organic groups free of oxygen, and combinations thereof.

5. An article as set forth in claim 4 wherein at least one R is selected from the group of:
A.) linear or branched C₁ to C₁₀ hydrocarbyl groups;
B.) linear or branched substituted C₁ to C₁₀ hydrocarbyl groups; and
C.) aromatic groups.

6. An article as set forth in any preceding claim wherein said fibers comprise (iii) said cured product of said organopolysiloxane (i) and (ii) or
(iv) a cured product of said organopolysiloxane (ii)
and wherein at least one R in said cured product (iii) or said cured product (iv) represents the product of a crosslinking reaction.

7. An article as set forth in any preceding claim wherein said organopolysiloxane component is present in said fibers in an amount of at least 1 % by weight based on a total weight of said fibers in said article.

8. An article as set forth in any preceding claim wherein said fibers further comprise a conductivity-enhancing additive component.

9. An article as set forth in any preceding claim wherein said article is further defined as a non-woven mat formed through electrospinning a composition comprising said organopolysiloxane component.

10. A method of forming an article comprising fibers, said method comprising the step of electrospinning a composition to form fibers, the composition comprising an organopolysiloxane component selected from the group of:
a blend of (i) an organopolysiloxane having the formula
(R₃SiO_{1/2})_{w}(R₂SiO_{2/2})ₓ(RSiO_{3/2})_{y}(SiO_{4/2})z (I),
wherein each R is selected from the group of an inorganic group, an organic group, and combinations thereof, w is from 0 to 0.95, x is from 0 to 0.95, y is from 0 to 1, z is from 0 to 0.9, w+x+y+z=1, and y+z is from 0.1 to 1 and (ii) an organopolysiloxane having the formula (I), wherein each R is selected from the group of an inorganic group, an organic group, and combinations thereof, w is greater than 0 to 0.95, x is greater than 0 to 0.95, w+x+y+z=1, and y+z is less than 0.1, and
said organopolysiloxane (ii),
provided that the composition is free from organic polymers, all-organic copolymers, and organosiloxane-organic copolymers.

11. A method as set forth in claim 10 wherein at least one R represents a crosslinkable functional group.

12. A method as set forth in any one of claims 10-11 wherein the composition further comprises a carrier solvent.

13. A method as set forth in claim 12 wherein the organopolysiloxane or organopolysiloxanes is/are present in the composition in an amount of from about 5% to about 95% by weight based on the total weight of the composition.

14. A method as set forth in any one of claims 10-13 wherein the composition further comprises a conductivity-enhancing additive component.

## Patentansprüche

1. Gegenstand, umfassend Fasern mit einem durchschnittlichen Durchmesser von 0,01 µm bis 100 µm, wobei die Fasern eine Organopolysiloxankomponente umfassen, ausgewählt aus:
einem Gemisch aus (i) einem Organopolysiloxan mit der Formel (R₃SiO_{1/2})_{w}(R₂SiO_{2/2})ₓ(RSiO_{3/2})_{y}(SiO_{4/2})z (I), worin jedes R ausgewählt ist aus der Gruppe aus einer anorganischen Gruppe, einer organischen Gruppe und Kombinationen davon, w 0 bis 0,95 ist, x 0 bis 0,95 ist, y 0 bis 1 ist, z 0 bis 0,9 ist, w+x+y+z=1 und y+z 0,1 bis 1 ist, und (ii) einem Organopolysiloxan mit der Formel (I), wobei jedes R ausgewählt ist aus der Gruppe, bestehend aus einer anorganischen Gruppe, einer organischen Gruppe und Kombinationen davon, w größer als 0 bis 0,95 ist, x größer als 0 bis 0,95 ist, w+x+y+z=1 und y+z geringer als 0,1 ist,
dem Organopolysiloxan (ii),
(iii) einem gehärteten Produkt aus dem Gemisch aus Organopolysiloxanen (i) und (ii),
(iv) einem gehärteten Produkt aus dem Organopolysiloxan (ii) und Kombinationen des Gemischs aus (i) und (ii), und (iii),
mit der Maßgabe, dass die Fasern frei sind von organischen Polymeren, vollständig organischen Copolymeren sowie Organosiloxan-organischen Copolymeren.

2. Gegenstand gemäß Anspruch 1, wobei das Organopolysiloxan (ii) ein zahlenmittleres Molekulargewicht (Mₙ) von wenigstens 50.000 g/mol aufweist.

3. Gegenstand gemäß Anspruch 1, wobei das Organopolysiloxan (ii) des Weiteren der Formel (R¹₃SiO_{1/2})_{w'}(R¹₂SiO_{2/2})_{x'} (ii) genügt, wobei R¹ ausgewählt ist aus der Gruppe aus einer anorganischen Gruppe, einer organischen Gruppe und Kombinationen davon, wobei w' und x' unabhängig größer sind als 0 und w'+x'₌1.

4. Gegenstand gemäß einem der vorangehenden Ansprüche, wobei R ausgewählt ist aus der Gruppe aus sauerstoffhaltigen Gruppen, organischen Gruppen, die frei von Sauerstoff sind, und Kombinationen davon.

5. Gegenstand gemäß Anspruch 4, wobei wenigstens eine Gruppe R ausgewählt ist aus der Gruppe aus:
A.) linearen oder verzweigten C₁- bis C₁₀-Hydrocarbylgruppen;
B.) linearen oder verzweigten substituierten C₁- bis C₁₀-Hydrocarbylgruppen; und
C.) aromatischen Gruppen.

6. Gegenstand gemäß einem der vorangehenden Ansprüche, wobei die Fasern (iii) das gehärtete Produkt des Organopolysiloxans (i) und (ii) oder
(iv) ein gehärtetes Produkt aus dem Organopolysiloxan (ii) umfassen
und wobei wenigstens eine Gruppe R im gehärteten Produkt (iii) oder dem gehärteten Produkt (iv) das Produkt einer Vernetzungsreaktion darstellt.

7. Gegenstand gemäß einem der vorangehenden Ansprüche, wobei die Organopolysiloxankomponente in den Fasern in einer Menge von wenigstens 1 Gew.-%, bezogen auf das Gesamtgewicht der Fasern in dem Gegenstand, beträgt.

8. Gegenstand gemäß einem der vorangehenden Ansprüche, wobei die Fasern des Weiteren eine die Leitfähigkeit verstärkende Additivkomponente aufweisen.

9. Gegenstand gemäß einem der vorangehenden Ansprüche, wobei der Gegenstand des Weiteren definiert ist als Vliesmatte, die durch Elektrospinnen einer Zusammensetzung, welche die Organopolysiloxankomponente umfasst, gebildet wird.

10. Verfahren zur Bildung eines Gegenstands, der Fasern umfasst, wobei das Verfahren das Elektrospinnen einer Zusammensetzung unter Bildung von Fasern umfasst, wobei die Zusammensetzung eine Organopolysiloxankomponente umfasst, ausgewählt aus der Gruppe aus:
einem Gemisch aus (i) einem Organopolysiloxan mit der Formel (R₃SiO_{1/2})_{w}(R₂SiO_{2/2})ₓ(RSiO_{3/2})_{y}(SiO_{4/2})_{z} (I), worin jedes R ausgewählt ist aus der Gruppe aus einer anorganischen Gruppe, einer organischen Gruppe und Kombinationen davon, w 0 bis 0,95 ist, x 0 bis 0,95 ist, y 0 bis 1 ist, z 0 bis 0,9 ist, w+x+y+z=1 und y+z 0,1 bis 1 ist, und (ii) einem Organopolysiloxan mit der Formel (I), wobei jedes R ausgewählt ist aus der Gruppe, bestehend aus einer anorganischen Gruppe, einer organischen Gruppe und Kombinationen davon, w größer als 0 bis 0,95 ist, x größer als 0 bis 0,95 ist, w+x+y+z=1 und y+z geringer als 0,1 ist,
dem Organopolysiloxan (ii),
mit der Maßgabe, dass die Zusammensetzung frei ist von organischen Polymeren, vollständig organischen Copolymeren und Organosiloxan-organischen Copolymeren.

11. Verfahren gemäß Anspruch 10, wobei wenigstens eine Gruppe R eine vernetzbare funktionelle Gruppe darstellt.

12. Verfahren gemäß einem der Ansprüche 10-11, wobei die Zusammensetzung des Weiteren ein Trägerlösungsmittel umfasst.

13. Verfahren gemäß Anspruch 12, wobei das Organopolysiloxan oder die Organopolysiloxane in der Zusammensetzung in einer Menge von etwa 5 bis etwa 95 Gew.-%, bezogen auf das Gesamtgewicht der Zusammensetzung, vorliegt/vorliegen.

14. Verfahren gemäß einem der Ansprüche 10-13, wobei die Zusammensetzung des Weiteren eine die Leitfähigkeit verstärkende Additivkomponente umfasst.

## Revendications

1. Article comprenant des fibres ayant un diamètre moyen de 0,01 µm à 100 µm, lesdites fibres comprenant un composant organopolysiloxane sélectionné parmi :
un mélange de (i) un organopolysiloxane de formule (R₃SiO_{1/2})_{w}(R₂SiO_{2/2})ₓ(RSiO_{3/2})_{y}(SiO_{4/2})_{z} (I), dans laquelle chaque R est sélectionné dans le groupe constitué d'un groupe inorganique, d'un groupe organique, et de leurs combinaisons, w vaut de 0 à 0,95, x vaut de 0 à 0,95, y vaut de 0 à 1, z vaut de 0 à 0,9, w + x + y + z = 1, et y + z vaut de 0,1 à 1 et (ii) un organopolysiloxane de formule (I), dans laquelle chaque R est sélectionné dans le groupe constitué d'un groupe inorganique, d'un groupe organique, et de leurs combinaisons, w vaut de plus de 0 à 0,95, x vaut de plus de à 0 à 0,95, w + x + y + z = 1, et y + z vaut moins de 0,1,
ledit organopolysiloxane (ii),
(iii) un produit durci dudit mélange d'organopolysiloxanes (i) et (ii),
(iv) un produit durci dudit organopolysiloxane (ii), et
des combinaisons du mélange de (i), (ii) et (iii),
à condition que lesdites fibres soient dépourvues de polymères organiques, de copolymères tout organiques, et de copolymères organosiloxane-organiques.

2. Article selon la revendication 1, dans lequel ledit organopolysiloxane (ii) a une masse moléculaire moyenne en nombre (Mₙ) d'au moins 50 000 g/mol.

3. Article selon la revendication 1, dans lequel l'organopolysiloxane (ii) satisfait en outre la formule (R¹₃SiO_{1/2})_{w'}(R¹₂SiO_{2/2})_{x'} (II), dans laquelle R¹ est sélectionné dans le groupe constitué d'un groupe inorganique, d'un groupe organique, et de leurs combinaisons, w' et x' sont indépendamment supérieurs à 0, et w' + x' = 1.

4. Article selon une quelconque revendication précédente, dans lequel R est sélectionné dans le groupe constitué des groupes contenant de l'oxygène, des groupes organiques ne contenant pas d'oxygène, et de leurs combinaisons.

5. Article selon la revendication 4, dans lequel au moins un R est sélectionné dans le groupe constitué :
A.) des groupes hydrocarbyle en C₁ à C₁₀ linéaires ou ramifiés ;
B.) des groupes hydrocarbyle en C₁ à C₁₀ substitués, linéaires ou ramifiés ; et
C.) des groupes aromatiques.

6. Article selon une quelconque revendication précédente, dans lequel lesdites fibres comprennent (iii) ledit produit durci dudit organopolysiloxane (i) et (ii) ou
(iv) un produit durci dudit organopolysiloxane (ii)
et dans lequel au moins un R dans ledit produit durci (iii) ou ledit produit durci (iv) représente le produit d'une réaction de réticulation.

7. Article selon une quelconque revendication précédente, dans lequel ledit composant organopolysiloxane est présent dans lesdites fibres en une quantité d'au moins 1 % en poids sur la base du poids total desdites fibres dans ledit article.

8. Article selon une quelconque revendication précédente, dans lequel lesdites fibres comprennent en outre un composant additif améliorant la conductivité.

9. Article selon une quelconque revendication précédente, dans lequel ledit article est en outre défini comme un tapis non tissé formé par électrofilage d'une composition comprenant ledit composant organopolysiloxane.

10. Procédé de formation d'un article comprenant des fibres, ledit procédé comprenant l'étape d'électrofilage d'une composition pour former des fibres, la composition comprenant un composant organopolysiloxane sélectionné dans le groupe constitué :
d'un mélange (i) d'un organopolysiloxane de formule (R₃SiO_{1/2})_{w}(R₂SiO_{2/2})ₓ(RSiO_{3/2})_{y}(SiO_{4/2})_{z} (I), dans laquelle chaque R est sélectionné dans le groupe constitué d'un groupe inorganique, d'un groupe organique, et de leurs combinaisons, w vaut de 0 à 0,95, x vaut de 0 à 0,95, y vaut de 0 à 1, z vaut de 0 à 0,9, w + x + y + z = 1, et y + z vaut de 0,1 à 1 et (ii) un organopolysiloxane de formule (I), dans laquelle chaque R est sélectionné dans le groupe constitué d'un groupe inorganique, d'un groupe organique, et de leurs combinaisons, w vaut de plus de 0 à 0,95, x vaut de plus de 0 à 0,95, w + x + y + z = 1, et y + z vaut moins de 0,1, et
ledit organopolysiloxane (ii),
à condition que ladite composition soit dépourvue de polymères organiques, de copolymères tout organiques, et de copolymères organosiloxane-organiques.

11. Procédé selon la revendication 10, dans lequel au moins un R représente un groupe fonctionnel réticulable.

12. Procédé selon l'une quelconque des revendications 10 à 11, dans lequel la composition comprend en outre un solvant vecteur.

13. Procédé selon la revendication 12, dans lequel l'organopolysiloxane ou les organopolysiloxanes est/sont présent(s) dans la composition en une quantité d'environ 5 % à environ 95 % en poids sur la base du poids total de la composition.

14. Procédé selon l'une quelconque des revendications 10 à 13, dans lequel la composition comprend en outre un composant additif améliorant la conductivité.
